# EUROPEAN PATENT SPECIFICATION

(11) **EP 0 643 357 B1**
(45) Date of publication and mention of the grant of the patent: **16.01.2002**
(21) Application number: 94113432.2
(22) Date of filing: 28.08.1994
(51) Int. Cl.: G06F 17/27

(54) **Text input method**
Verfahren zur Texteingabe
Méthode d'entrée de texte

(30) Priority: 31.08.1993 JP 25124893; 19.06.1994 JP 17153294
(43) Date of publication of application: 15.03.1995
(73) Proprietor: Aida, Mitsuhiro, Nara City, Nara 630 (JP)
(72) Inventor: Aida, Mitsuhiro, Nara City, Nara 630 (JP)
(74) Representative: Enskat, Michael Antony Frank

(56) References cited:
- EP-A- 0 170 197
- EP-A- 0 352 377
- US-A- 5 040 113

## Description

The present invention relates to a text input method to lower the burden of text input for an information processing and communication control system.

A conventional text input method utilises abbreviations (e.g. 'assoc' for 'association') or shorthand words (e.g. 'e' for editing, '1' for loading). However, in such conventional methods, it is necessary to remember the abbreviation and activate a function to find the desired word by depressing a special function key, and its efficiency depends on an operator's ability, as the operator has to remember all the characters of abbreviation or shorthand words in a dictionary which correspond to those of data input for the successful functioning to find a match.

European Patent No EP-A-0 170 197, according to the description, discloses a character input device, comprising keyboard means having at least a plurality of character keys and a search key, text memory means for storing documents data consisting of a plurality of words and word positioning data, search character data memory means, word positioning data search means, keyword memory means, comparison means, and a central processing unit, means for controlling the writing of the input character data in said text memory means in the order of key operation, and means for controlling the writing of a word, identical to the key word in said text memory means, in place of at least one character data stored in said search character data memory means, as based upon the discriminating result from said comparison means for indicating coincides.

In the above mentioned character input device, when the operator inputs characters to be searched, and operates the search key, a word having a starting portion corresponding to the characters to be searched can be searched. The searched word is stored in the memory as a new input word, and is displayed on the display device or the like. Therefore, a previously stored word can be automatically inputted and stored in the memory, without limitation as to the number of its characters, by operating the special-purpose search key. A special-purpose search key is, however, required.

An object of the present invention is to achieve a target to eliminate such deficiencies of the conventional methods.

The applicant's method requires no special-purpose dictionary but it utilises a standard dictionary, or a quasi-standard dictionary consisting of a line of text and an original word, or a selective dictionary having a principal part of the standard dictionary with an addition of the relevant words for each word to collate with the entered line of text in the dictionary, or an abbreviation dictionary for the case it is useful.

The text input method of the invention, was intended to provide a way of data input, giving an efficient and natural way for the operator without being conscious of it while it is in use and by the step equivalent to what they have been doing up until now.

According to the present invention there is provided a text input method comprising:
a step for entering a line of text data, character by character, a dictionary step for storing a plurality of data consisting of a line of text data such as an abbreviation or a shorthand, and associated word data in a dictionary;
characterised in that said associated word data contains one or more relevant words and in that the method comprises;
a step for determining a unique line of text data in said dictionary which includes said entered line of text data, without a further special key depression, at the time of each character input;
a step for entering one or more additional character data and for determining a unique word among plural relevant words which terminates with said entered data, or which includes said entered data in the remaining part of word other than that was successfully collated, without a further special key depression, at the time of each character input; and
a step for replacing said entered line of text data with what was determined by said step for determining said unique line of text data or by said step for determining said unique word, without a further special key depression.

Further aspects and preferred embodiments of the invention are set out in the dependent claims.

Some examples for the number of character positions in a word to be unique in the dictionary in comparison with the total number of characters of word, are given in Table 1. The examples of a line text data are shown in table 1.

Also, there is a possibility of being able to find the unique data quicker in the dictionary, by decreasing the number of short words to store in the dictionary. For example, "ability" can be identified as its 3^{rd} character positions (ie abi), in a selective dictionary if "abide" is not in the dictionary.

**TABLE 1**

| **Standard Dictionary** | | |
|---|---|---|
| Word (or line of text) | The number of character position in a word to be unique in the dictionary | The total number characters of the word |
| abandon | 4 | 7 |
| abate | 4 | 5 |
| abbot | 4 | 5 |
| abdomen | 3 | 7 |
| abhor | 3 | 5 |
| abnormal | 3 | 8 |
| aboard | 4 | 6 |
| abolish | 6 | 7 |
| abolition | 6 | 9 |
| abominable | 4 | 10 |
| abound | 5 | 6 |
| about | 5 | 5 |
| above | 4 | 5 |
| abridge | 4 | 7 |
| abroad | 4 | 6 |
| abrupt | 4 | 6 |
| absence | 6 | 7 |
| absent | 6 | 6 |
| absinthe | 4 | 8 |
| absolute | 6 | 8 |
| absolve | 6 | 7 |
| absorb | 5 | 6 |
| absorbent | 7 | 9 |
| abstain | 5 | 7 |
| Total | 127 | 184 |
| (127/184 = 0.69:31% difference | | |

Embodiments of the invention will now be described, by way of example only, with reference to the accompanying drawings, in which:

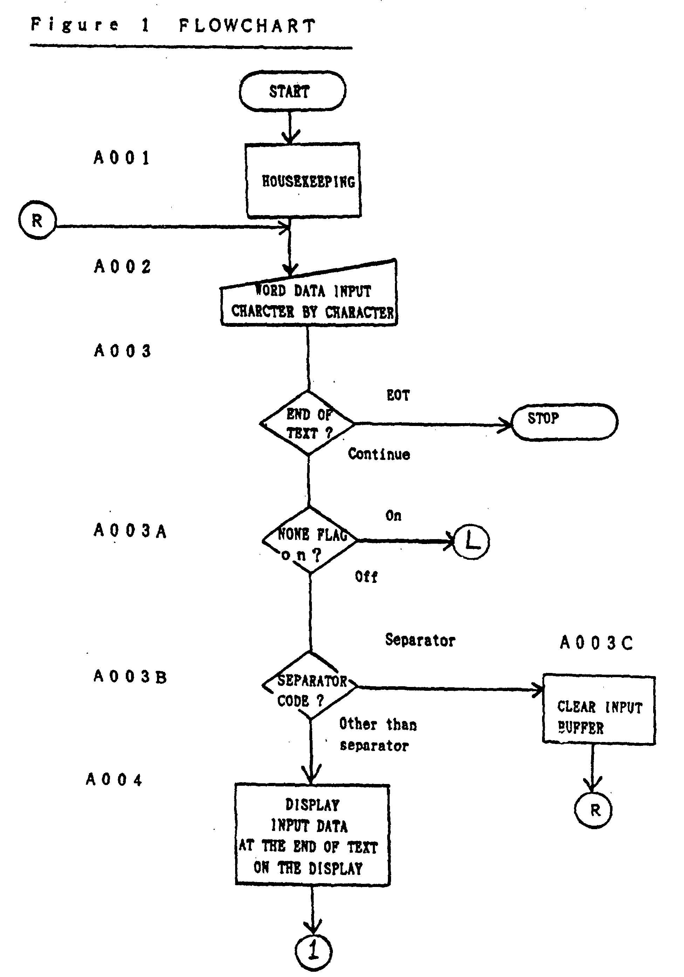

Figures 1 to 11 show a text input method according to the present invention; and
Figures 12 to 13 show examples of the dictionary to be used.

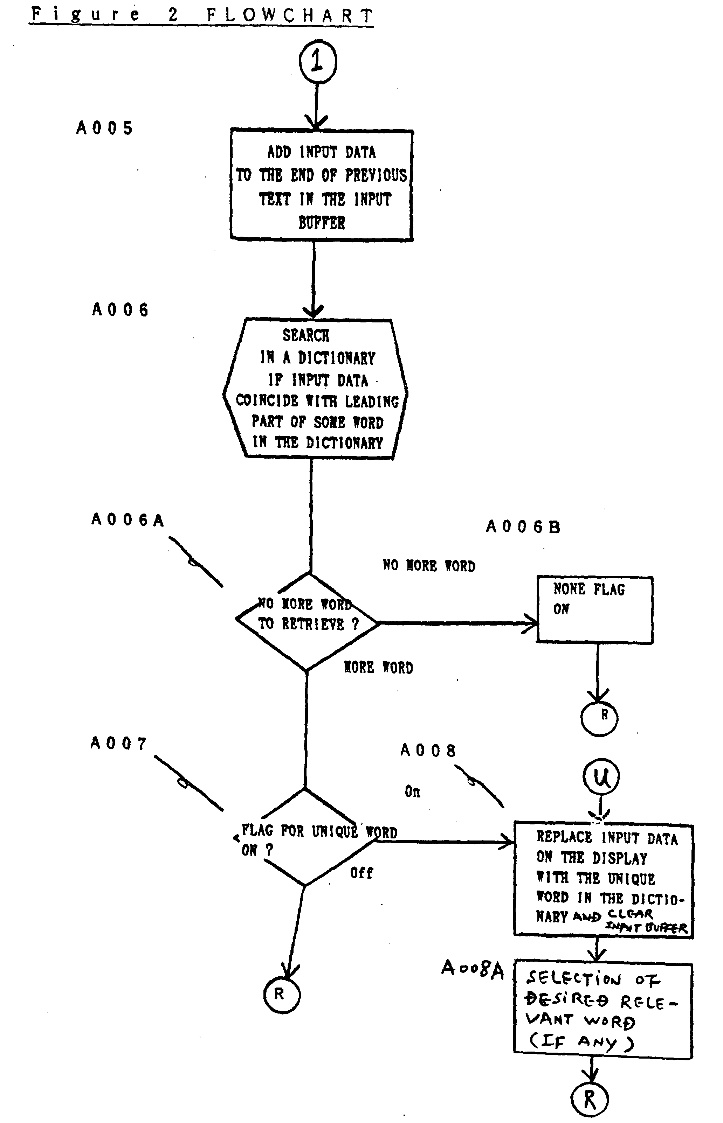

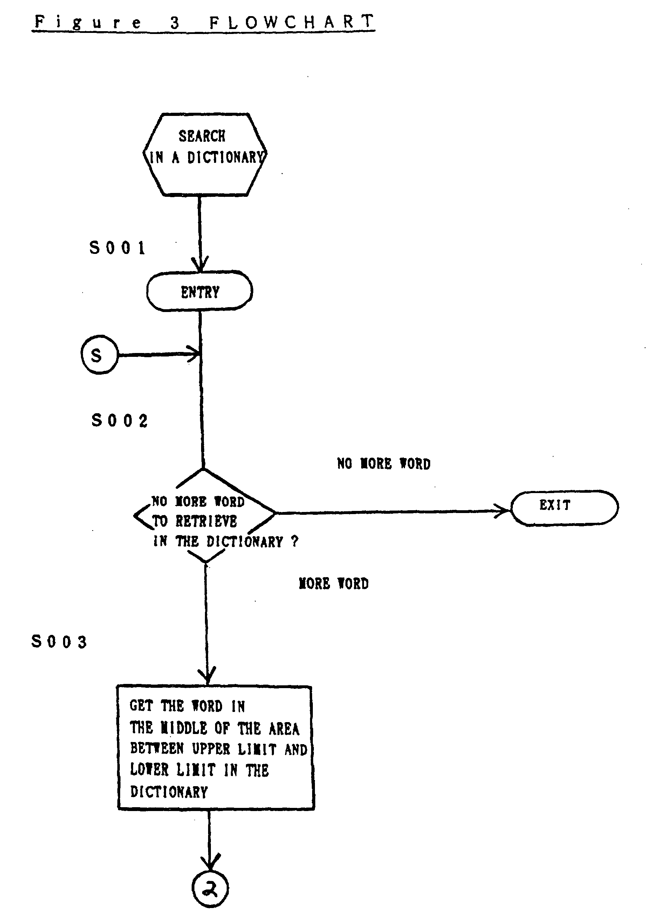

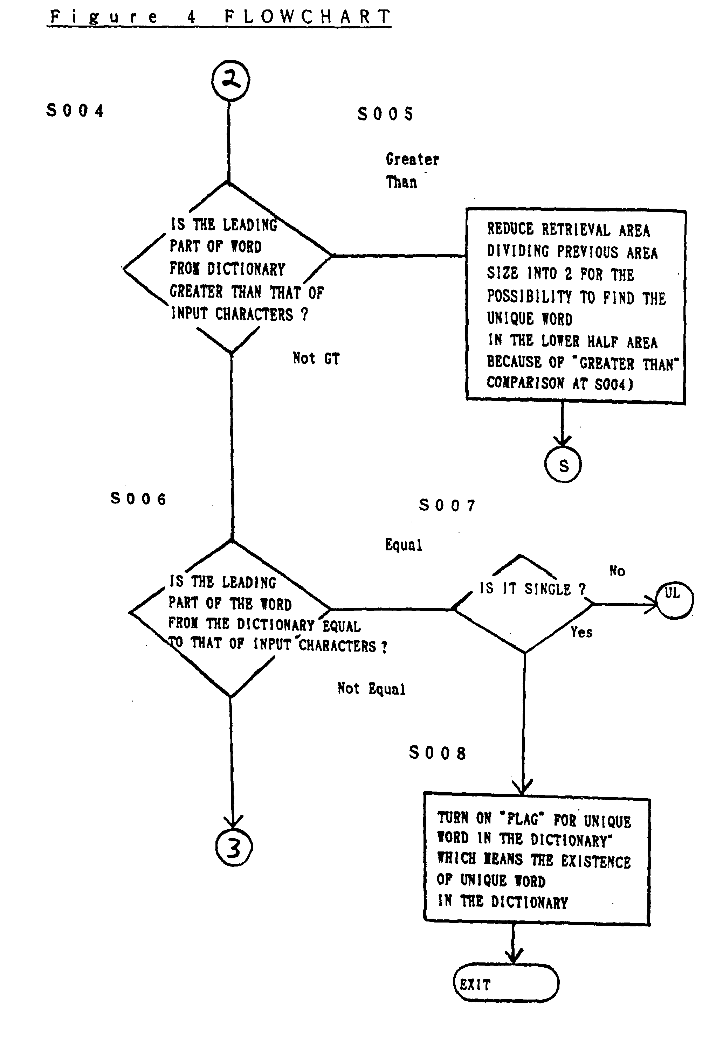

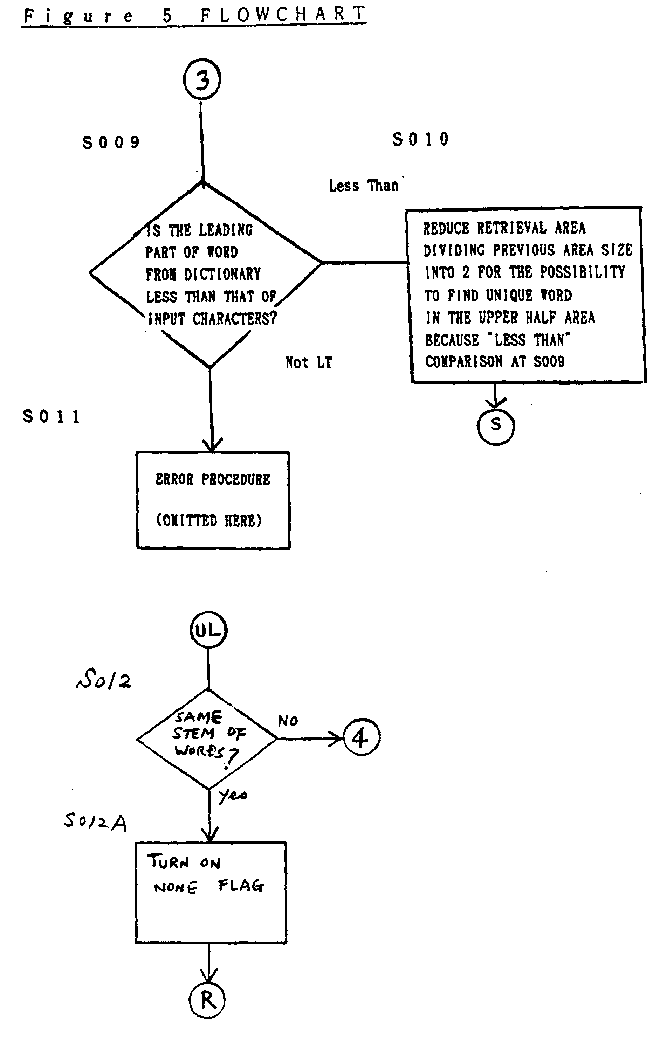

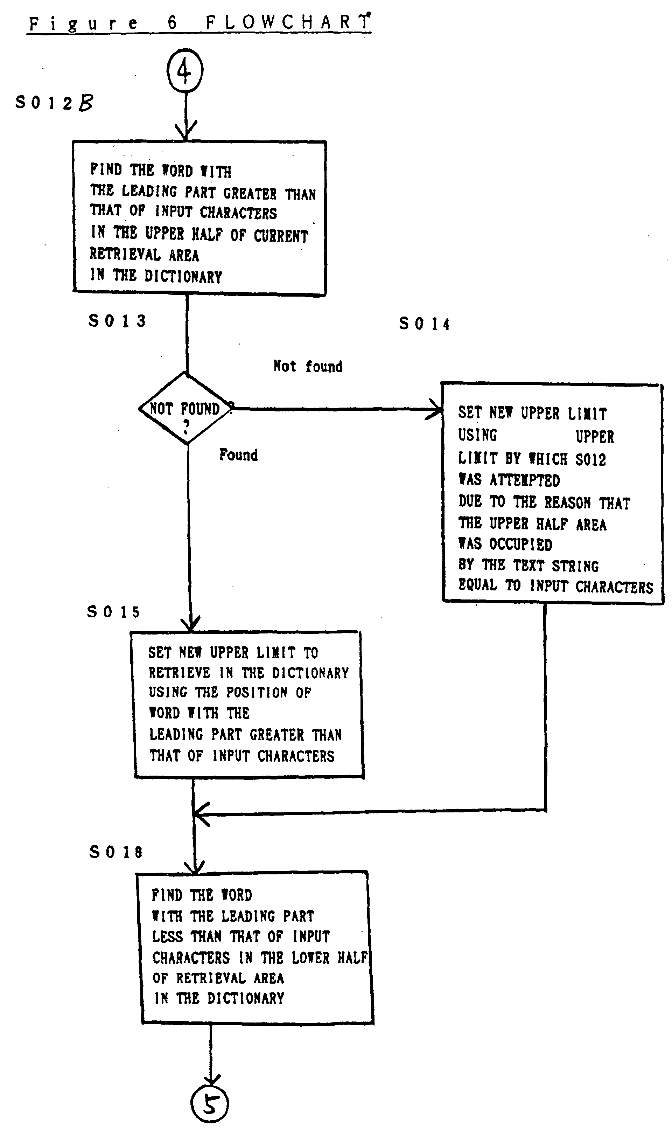

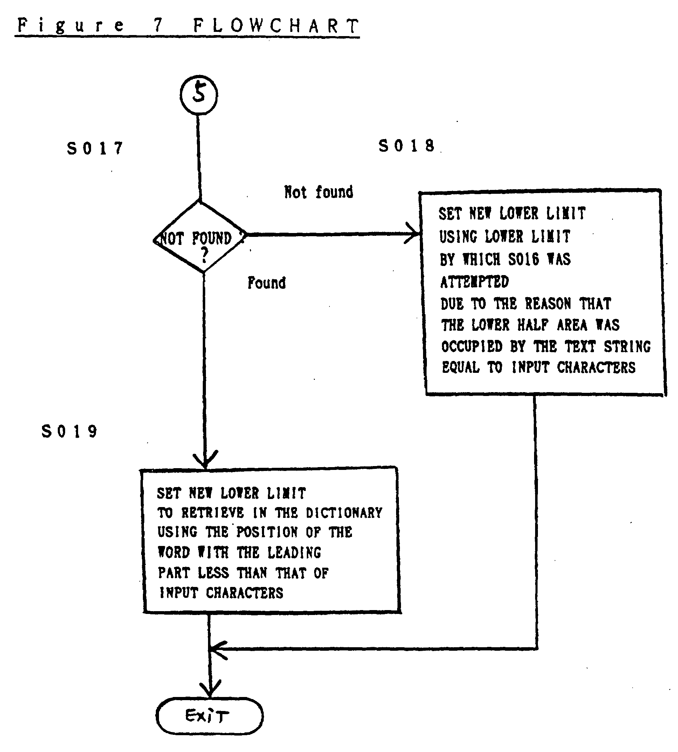

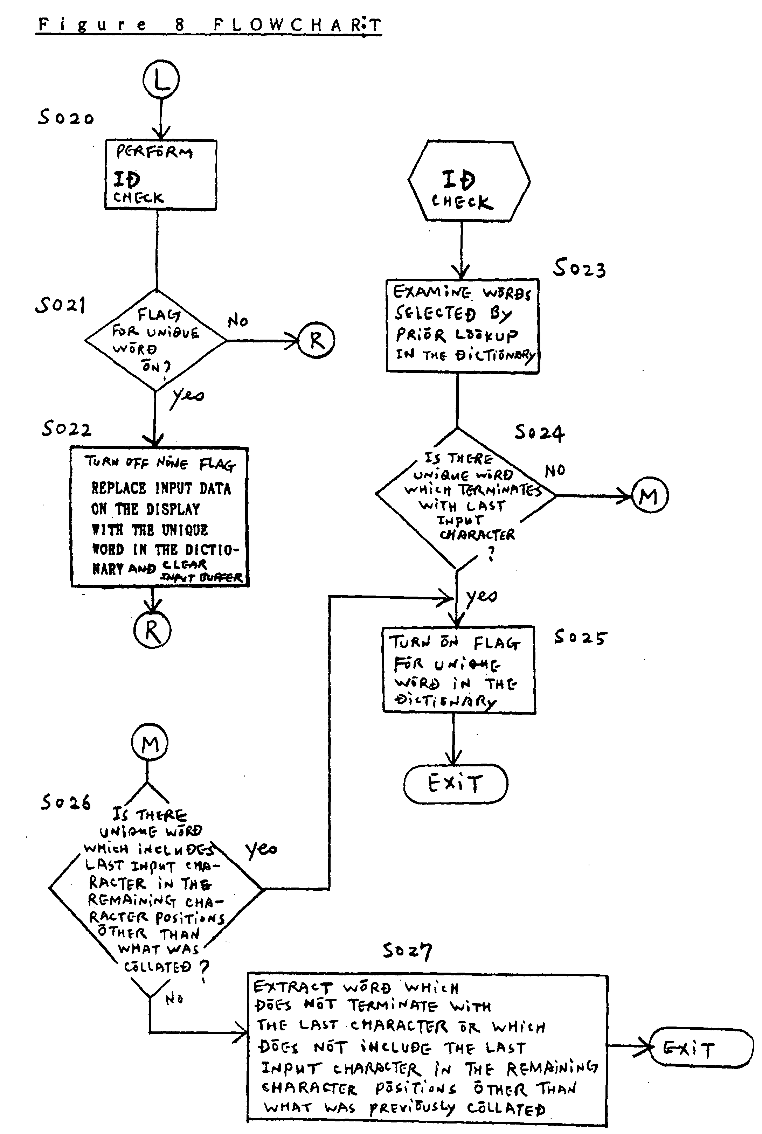

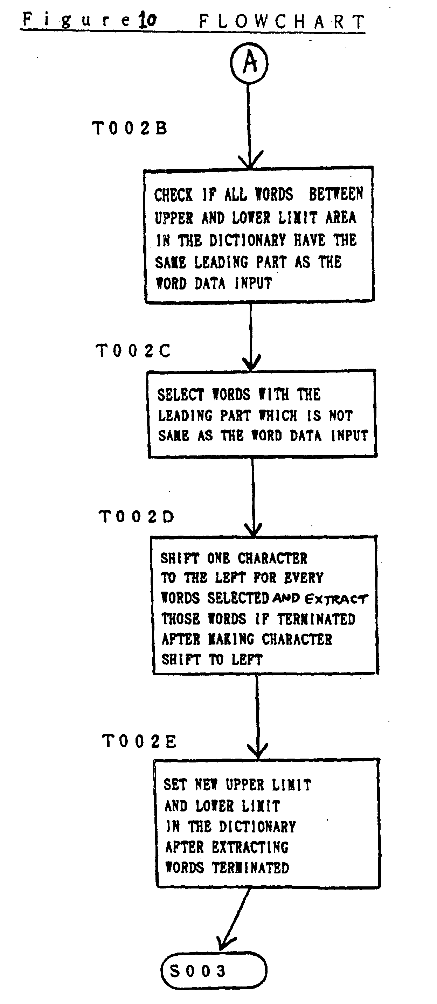

In the flowchart of Figure 2 to Figure 11, A001 is a first step to initialise, ie clearing the contents of counters, flags, and work area, at the time to begin the process.

Next A002 accepts a data input, eg character by character, from the keyboard.

A003 checks if the input data is an END code to show the end of transaction, and if YES, the step goes to the stop of process. Otherwise, the step proceeds to A003A.

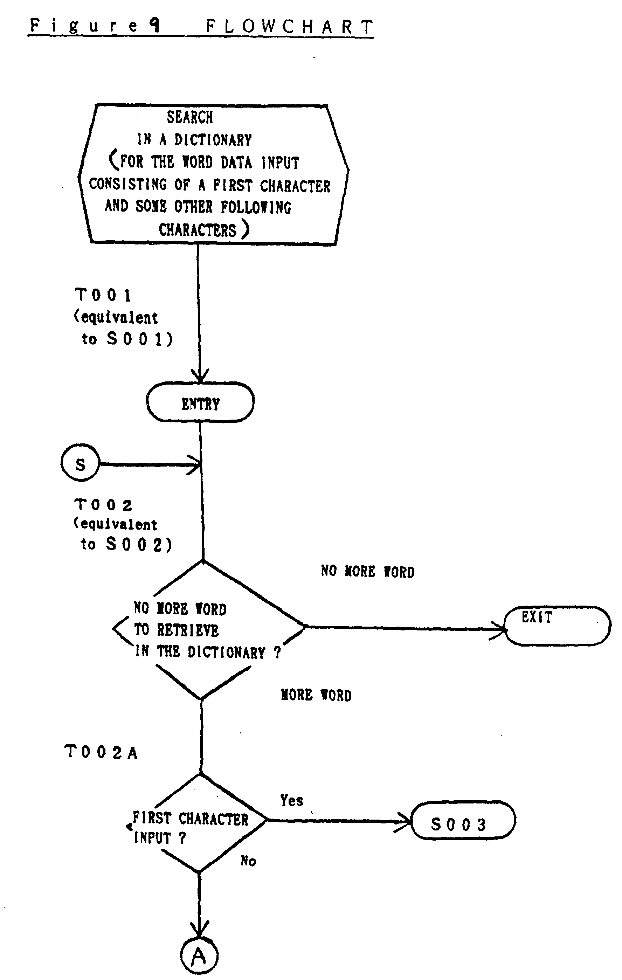

A003A tests if the NONE flag is ON which means that there is no data which includes the data input in the dictionary. If YES, the step goes to S020 in which the ID check steps are performed to find the unique one with the same last data as the last entered data in the remaining positions other than that was already collated (in Figure 9), as the ID check steps are performed after the input of last data and prior to its dictionary search, utilising a flag of NONE flag which is set ON at A006B.

It means that an attempt to search at A006 by the previous input has failed and the NONE flag was set ON for the purpose to activate ID check steps to find the data for "some leading data and some other data to be unique in the dictionary". If NONE flag is OFF, the step proceeds to next A003B.

A003B tests if the input data is a separator code. If it is not the separator code, the process proceeds to A004 in which the input data is displayed at the end of data shown on the display. If it is the separator code at the testing of A003B, the step goes to A003C in which the input buffer is cleared and the step goes back to A002 for the next data input.

After displaying the input data at A004, the next step A005 adds the data input to the end of previous data in the input buffer memory. Then, the step goes to A006 that is the process of dictionary search.

A006 performs a dictionary search to get the data which has the same leading part as the data input and unique in the dictionary, as one of example in the case, as there are some other cases to find the data which is unique, in spite of the kinds of data, eg input of the first data followed by some other data for the line of text data to represent the unique one in the dictionary and so on. This process is performed by the steps commencing S001.

Next A006A tests if the result of dictionary search at A006 shows that there are data to search. If there is no data, the step goes to A006B in which the NONE flag is turned ON and goes back to A002 for the next data input. In this example, NONE flag is used for the purpose to perform a sequence of "input of following data and ID check is to find the unique data with the same last data as the last entered data or with the same last data as the last entered data in the remaining parts other than that was already collated". If the test result at A006A is not negative which means that there are still data to search, next A007 tests if the step of A006A found the unique one in the dictionary. If not, the step goes back to A002 for the next input to continue the data input and dictionary search.

At A008 branching from A007, the method replaces entered data on the display with the unique data from the dictionary, and the contents of input buffer is cleared for the next input, and goes to next A008A.
At A008A, the selection step for the case having plural number of relevant words in the dictionary after finding the unique data in the dictionary, in a manner that one of relevant data may be selected on the display in this case, because the other selection steps are performed by ID check at S020, testing the existence of data which is unique and terminates with the same one as the last data input or which is unique and includes the same data as the last entered data in the remaining part that was already collated. Then the step goes back to A002 for the next data input.

S001 is an entry of the process to search in the dictionary. S002 is to test if there is no more word to retrieve in the dictionary. If so, the process goes to the exit of the process. If there are words to retrieve at the testing of S002, the process goes to the S003.

S003 gets the data located in the middle of area between upper limit and lower limit in the dictionary. In this case, the upper limit means the boundary of data in which its key word value is getting larger, and the lower limit means the boundary of data in which its key word value is getting smaller.

S004 compares the data input with the data in the dictionary, and tests if the leading part of data from the dictionary is greater than data input.

If the greater flag is ON at S004, the step goes to S005 to divide the retrieval area size into 2 to use the lower half area in the dictionary for the following retrieval, as there is a possibility to find the unique data in the lower half area, because the key word of dictionary data found at S003 was greater than the data input. Then, the step goes back to S002. If the greater than flag is OFF at S004, the step proceeds to S006.

At S006, it is tested if the leading part of data from the dictionary is equal to that of data input. If equal, S007 is performed to test if it is single. In case of a single one, the next step S008 turns the flag ON for the unique data in the dictionary and goes to exit of this sub-process. If there are plural number of data, the step goes to S012. If NOT EQUAL at S006, the step proceeds to S009.

At S009, the test is made if the leading part of data from the dictionary is less than that of data input.

If the less than flag is ON after testing at S009, S010 divides the retrieval area size into 2 to use the upper half area for the following retrieval, as there is a possibility to find the unique data in the upper half area, because the dictionary data found at S003 was less than that of data input. The step goes to S002.

If the less than flag is OFF at S009, there is something wrong with the procedure in the process and goes to the error procedure of S011 which is not described here, since it is not directly related to the invention.

Branching here from S007, S012 tries to see if the plural number of data have the same stem of word. If it is YES, the step goes to S012B. Otherwise, the step goes to S012A in which the NONE flag is turned ON and the step goes back to A002 for the following data input.

At S013 after performing the step of S012B to find the data with leading part greater than that of data input in the upper half of current retrieval area in the dictionary, it is tested if the data was found, and goes to S015 if found. Otherwise, the step goes to S014.

S015 sets a new upper limit to retrieve to the upper limit by which S012B was attempted, because of that the upper half area may have been occupied by the data equal to data input.

S015 sets a new upper limit to retrieve to the positions of data with the leading part greater than that of data input and goes to next S016.

S016 tries to find the data with the leading part less than that of data input in the lower half area of the dictionary.

S017 tests if the data was found.

S018 takes place if the data was not found at S017 and sets new lower limit to the position of the lower limit by which S016 was attempted because the lower area may have been occupied by the data with the leading part equal to that of the data input. Then, the step goes to the exit of this sub-process.

S019 arises if the data was found at S017 and sets a new lower limit to retrieve to the positions of data with the leading part less than that of data input and jumps to the exit of this sub-process.

Branching from A003A when the NONE flag is ON, S020 performs ID check steps to start with S023 which is an entry of sub-process. It is to test if there is the unique data which has the same last data as the last entered data in the remaining part other than that was already collated with the data input.

Next S021 checks the flag for the unique data. If its flag is OFF, the step goes back to A002 for the following data input. If the flag is ON, the step proceeds to next S022 which turns the NONE flag OFF and supplements the remaining part of data input on the display, using the unique data from dictionary. Then the step goes back to A002 for the following data input.

S023 is the start of sub-process which performs the determination process of unique data. S023 examines data which were selected by the prior look-up in the dictionary.

S024 tests if there is unique data which terminates with the same one as the last data input. If YES, the step goes to next S025 which turns the FLAG for the unique data ON, and goes to exit of this sub-process. If NO, the step goes to S026.

At S026, it is tested if there is the unique data which includes the last data input in the remaining part other than that was already collated with data input. If YES, the step goes to S025. If NO, the process goes to S025 to turn the FLAG for the unique data ON, and go to exit of this sub-process. IF NO, the step proceeds to the next S027 in which the process extracts data which do not have the same one as the last entered data or which do not include the same one as the last entered data in the remaining part other than that was already collated with the data input, and goes to the exit of this sub-process.

As a sub-process of the dictionary search for the data input consisting of a first character and some other following characters, T001 which is equivalent to the aforementioned S001, is an entry of this sub-process.

T002 which is equivalent to the aforementioned S002 checks if there are still words to retrieve in the dictionary. If there is no more data to retrieve, the step goes to the exit. The process advances to the next T002A, if there are words to retrieve.

T002A branches to the aforementioned S003 if the data input is the first one of input, and to the next T002B if it was not first.

T002B is to check if all data between upper and lower limit in the dictionary have the same leading part as those of data input.

T002C selects the words with the leading part which is not the same as that of data input.

T002D shifts one character to the left for every data word selected at T002C, and extracts those data words which terminate (= which have no more character) after making a character shift.

T002E sets new upper and lower limit to retrieve in the dictionary after extracting data words which terminates (= which have no more character) at T002D. Then, the step goes to the aforementioned S003.

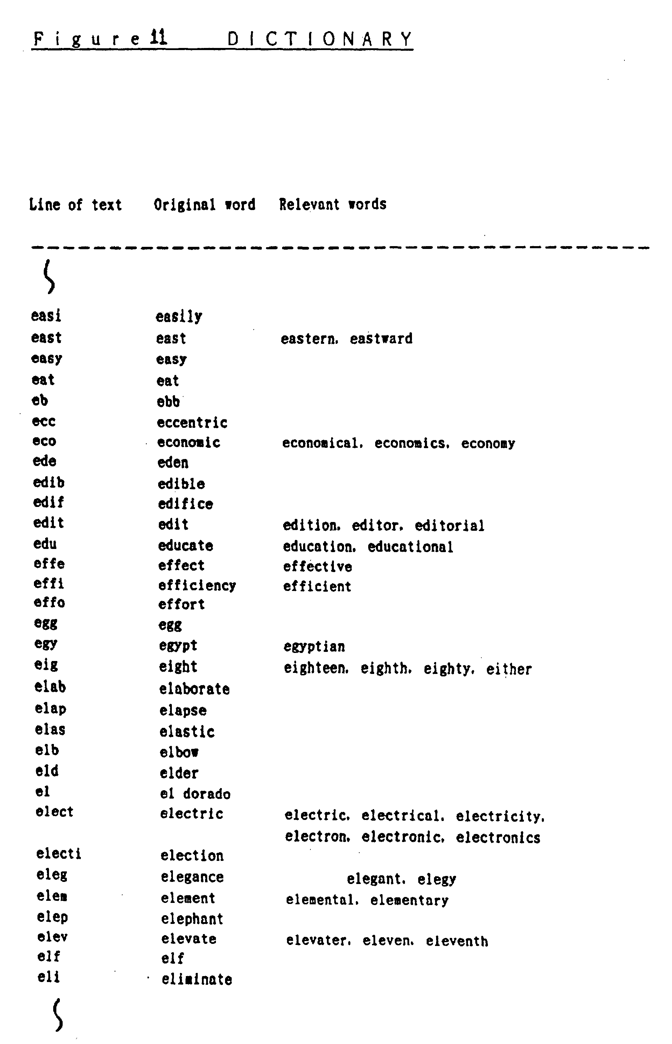

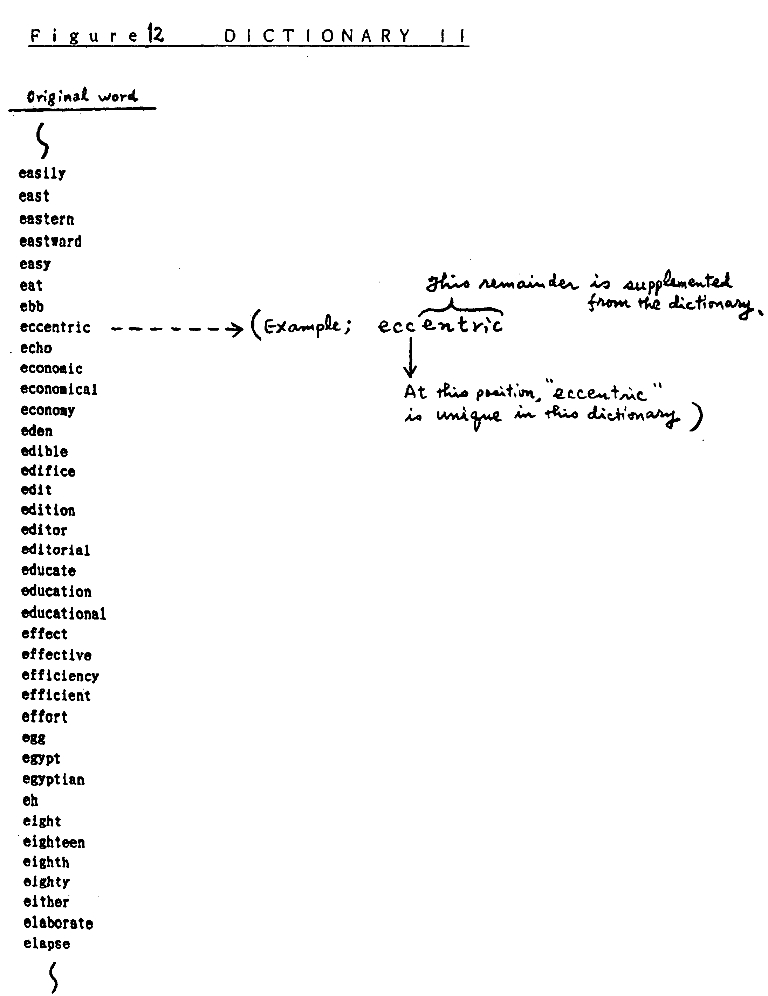

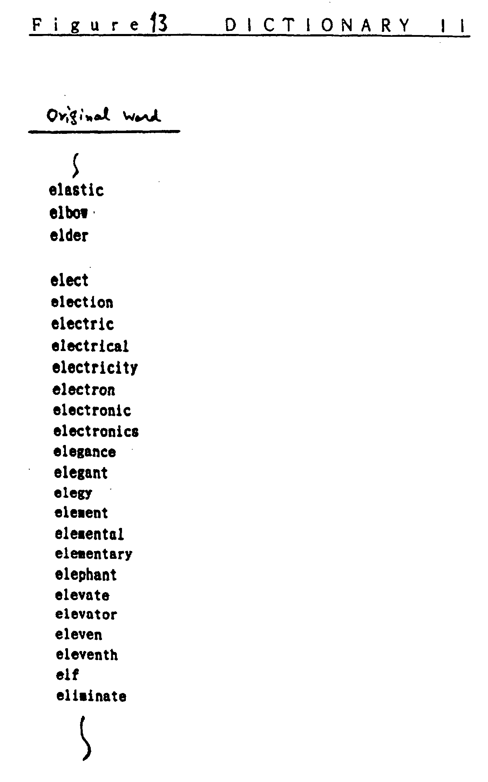

Figures 11, 12 and 13 are examples of the dictionary containing a line of text, original word, and relevant words.

## Claims

1. A text input method comprising:
a step for entering a line of text data, character by character, 91 a dictionary step for storing a plurality of data consisting of a line of text data such as an abbreviation or a shorthand, and associated word data in a dictionary;
**characterised in that** said associated word data contains one or more relevant words and **in that** the method comprises;
a step for determining a unique line of text data in said dictionary which includes said entered line of text data, without a further special key depression, at the time of each character input;
a step for entering one or more additional character data and for determining a unique word among plural relevant words which terminates with said entered data, or which includes said entered data in the remaining part of word other than that was successfully collated, without a further special key depression, at the time of each character input; and
a step for replacing said entered line of text data with what was determined by said step for determining said unique line of text data or by said step for determining said unique word, without a further special key depression.

2. A text input method comprising:
a step for entering a line of text data, character by character,
a dictionary step for storing a plurality of lines of text data;
a step for identifying plural lines of text data with the same stem of word in said dictionary each of which include said entered line of text data, entering one or more additional character data; and determining a unique line of text data among said identified plural lines of text data, which terminates with said entered data or which includes said entered data in the remaining part of line of text data other than that was successfully collated, without a further special key depression, at the time of each character input; 91 and a step for replacing said entered line of text data with what was determined by said step for identifying and determining said unique line of text data, without a further special key depression.

3. The method of any of the preceding claims, wherein the method comprises:
a step for entering a line of text data, and adding 1 to a data input counter, character by character;
a dictionary step for storing a plurality of lines of text data with unique position counts given to each line of text data;
a step for determining a unique line of text data with said unique position count in said dictionary which is the same as the contents of said data input counter and which
includes said entered line of text data, without a further special key depression, at the time of each character input; and
a step for identifying plural lines of text data which includes said entered line of text data, and determining a unique line of text data with said unique position count in said dictionary which is the smallest or largest number among said identified lines of text data, comparing said unique position count with the contents of said data input counter, without being actuated by the depression of a special function key, at the time of character input.

4. The method of any of the preceding claims, wherein the method comprises:
a step for determining a unique line of text data which has the same first and last parts as those of said entered line of text data and which include some other data between said first and last parts of said entered line of text data, regardless of the continuity of said some other data to be equivalent while collating between said entered line of text data and those in said dictionary, either from left to right comparison for said first part and its following data or from right to left for the comparison of said last part and its preceding data, without being actuated by the depression of a special function key, at the time of character input

5. The method of any of the preceding claims, wherein the method comprises:
a step for determining said unique line of text data which has the same leading part as said entered line of text data and which has the same end part as the remaining part of said entered line of text data, without being actuated by the depression of a special function key, at the time of data input.

6. The method of any of the preceding claims, wherein the method comprises:
a step for entering a line of text data consisting of a string of characters or character strokes;
a dictionary step for storing a plurality of lines of text data consisting of a string of characters or character strokes;
a step for determining a unique line of text data which includes said entered line of text data or which includes the first data followed by some other data of the line of text data to enter, without being actuated by the depression of a special function key, at the time of data input; and
a step for replacing said entered line of text data with what was determined by said step for determining said unique line of text data, or generating and outputting the print image generated using said line of text data which was determined by said step for determining said unique line of text data.

7. The method of any of the preceding claims, wherein:
a step for determining a unique line of text data comprises determining a predetermined number range of lines of text data in said dictionary;
a step for identifying and determining a unique word comprises determining a predetermined number range of words data in said dictionary; and
a step for identifying and determining a unique line of text data comprises determining a predetermined number range of lines of text data in said dictionary.

8. The method of any of the preceding claims, wherein the method comprises:
a dictionary step for storing a plurality of lines of text data which are organised in a random access manner.

## Patentansprüche

1. Eine Text-Eingabe-Methode, die umfaßt;
ein Schritt für Eingeben eine Zeile von Textdaten, Charakter durch Charakter;
ein Wörterbuch Schritt zum Speichern ein plurality von Daten, das Bestehen aus einer Zeile von Textdaten wie z.B. einer Abkürzung oder einem Stenographie und verbunden Wortdaten in einem Wörterbuch;
charakterisiert in daß obenerwähnt verbunden Wort Daten haben, eine oder mehr relevanten Wörter, und in daß, die Methode einschließt;
ein Schritt für Bestimmung von eine einmaligen Zeile von Textdaten in oben-erwähntem Wörterbuch, der einschließt, obenerwähnt eingetretene Zeile von Textdaten, ohne einen weiteren speziellen Tastenanschlag, Zu der Zeit von jeder Charakter-input;
ein Schritt für Eingeben eine oder mehr zusätzliche Charakter Daten, und für Bestimmung einer einmaligen Worte aus plural relevanten Wörtern, der endet mit obenerwähnt eingetretene Zeile von Textdaten, oder das einschließt, obenerwähnt eingetretene, Zeile von Textdaten, im restlichen Teil des Worte, außer vorherigem erfolgreichen Kollationieren, ohne einen weiteren speziellen Tastenanschlag, Zu der Zeit von jeder Charakter-input; und
ein Schritt für Ersetzen von obenerwähnt eingetretene Linie von Textdaten, mit Daten entschlossen durch oben-erwähnten Schritt für Bestimmen von eine einmalige Zeile von textdaten, oder durch oben-erwähntem Schritt für Bestimmen von einer einmaligen Wort, ohne einen weiteren speziellen Tastenanschlag.

2. Eine Text-Eingabe-Methode, die umfaßt;
ein Schritt für Eingeben eine Zeile von Textdaten, Charakter durch Charakter;
ein Wörterbuch Schritt zum Speichern eines plurality von Zeilen von Textdaten;
ein Schritt zum Identifizieren plural Zeilen von Textdaten mit dem gleichen Stamm des Wort in oben-erwähntem Wörterbuch, jedes, von dem einschließt, obenerwähnt eingetretene Zeile von Textdaten, Eingeben eine oder mehr zusätzliche Charakter Daten, und für Bestimmung von einer einmalige Zeile von Textdaten, aus identifizierten plural Zeilen von Textdaten, Enden mit obenerwähnt eingetretene Daten, oder der einschließt obenerwähnt eingetretene Daten, im restlichen Teil von Wort anders als Teil der vorherigem erfolgreichen Kollationieren, ohne einen weiteren speziellen Tastenanschlag, Zu der Zeit von jeder Charakter-input;
ein Schritt für Ersetzen von obenerwähnt eingetretene Zeile von Textdaten, mit Daten bestimmte durch, obenerwähnt Bestimmen Schritt für einer einmalige Zeile von textdaten, ohne einen weiteren speziellen Tastenanschlag.

3. Die Methode von irgendwelchen der vorausgegangenen Ansprüche, worin die Methode umfaßt:
ein Schritt für Eingeben eine Zeile von Textdaten, und für Hinzufügen 1 zu Daten-eingabe Theke, Charakter durch Charakter;
ein Wörterbuch Schritt zum Speichern eines plurality von Zeilen von Textdaten mit einmaligen Position Zahl, die zu jeder des Textdaten gegeben wird;
ein Schritt für Bestimmung von eine einmalige Linie von Textdaten mit obenerwähnt einzigartiger Position Zahl, das ist, genau wie der Inhalt von Daten-eingabe Theke obenerwähnt, und, das einschließt obenerwähnt eingetretene Linie von Textdaten, ohne eine weitere
spezielle Schlüsseldepression, Zu der Zeit von jeder Charakter input;
ein Schritt zum Identifizieren plural Zeilen von Textdaten, der einschließt, obenerwähnt eingetretene Linie von Textdaten, und Bestimmung von eine
einmaligen Zeile von Textdaten, mit obenerwähnt einzigartiger Position in obenerwähnt Wörterbuch, die ist, der Kleinste oder das Maximum Zahl aus obenerwähnt identifizierten Linien von Textdaten, vergleichend obenerwähnt einmaliger Position Zahl mit Daten-input Theke, ohne einen weiteren speziellen Tastenanschlag, Zu der Zeit von jeder Charakter-input.

4. Die Methode von irgendwelchen der vorausgegangenen Ansprüche, worin die Methode umfaßt:
ein Schritt für Bestimmung von eine einmalige Linie von Textdaten, der hat gleichen ersten und letzten Teile als jene von obenerwähnt eingetretene Linie von Textdaten, und der einschließt einige anderen Daten zwischen obenerwähnt zuerst und letzten Teile von eingetretene Linie von Textdaten, ungeachtet des Fortsetzung von einige anderen Daten, wesen gleichwertig während Kollationieren zwischen, obenerwähnt eingetretene Textdaten und jene in obenerwähntem Wörterbuch, entweder link zu rechtem Vergleich für den obenerwähnt ersten Teil und seinen nach Daten, oder Recht nach links Vergleich für obenerwähnt letzten Teil und seine vorhergehenden Daten, ohne die Depression eines speziellen Funktionsschlüssels, zur Zeit von jeder Charakter-Einganges;

5. Die Methode von irgendwelchen der vorausgegangenen Ansprüche, worin die Methode umfaßt:
ein Schritt für Bestimmung von eine einmalige linie von Textdaten, mit den gleichen führender Teil als führender Teil von obenerwähnt eingetretene Linie von Textdaten, und mit den gleichen Endenteil als restliche Teil von obenerwähnt eingetretene Zeile von Textdaten, ohne die Depression von eines speziellen Funktionsschlüssels, Zu der Zeit jeder Charakter-input.

6. Die Methode von irgendwelchen der vorausgegangenen Ansprüche, worin die Methode umfaßt:
ein Schritt für Eingeben eine Zeile von Textdaten, das besteht aus einer Schnur von Charakteren oder Charakter Schlägen;
ein Wörterbuch Schritt zum Speichern eines plurality von Zeilen von Text-daten, das besteht aus einer Schnur von Charakteren oder Charakter Schlägen;
ein Schritt für das Bestimmung von eine einmalige Linie von Textdaten, der einschließt obenerwähnt eingetretene Linie von Textdaten, oder der einschließt die ersten daten und einige anderen folgenden Daten von obenerwähnt eingetretene Linie von Textdaten, ohne Depression eines speziellen Funktionsschlüssels, Zu der Zeit von jeder Charakter-input;
ein Schritt für Ersetzen von obenerwähnt eingetretene Linie von Textdaten, mit Daten entschlossen durch oben-erwähnten Schritt für Bestimmen von eine einmalige Zeile von Textdaten, oder Erzeugen und Drucken des Bild die benutzt Daten entschlossen durch oben-erwähntem Schritt für Bestimmen von einer einmaligen Zeilen von Textdaten.

7. Die Methode von irgendwelchen der vorausgegangenen Ansprüche, worin die Methode umfaßt:
ein Schritt für Bestimmung von eine einmalige Linie von Textdaten einschließt einem predetermined Zahl Bereich von Textdaten in oben-erwähntem Wörterbuch;
ein Schritt für Identifizieren und Bestimmung von eine einmaligen Wort einschließt predetermined Zahl Bereich von Wort Daten in oben-erwähntem Wörterbuch;
ein Schritt für Identifizieren und Bestimmung von eine einmalige Linie von Textdaten einschließt einem predetermined Zahl Bereich von Linie von Textdaten in oben-erwähntem Wörterbuch.

8. Die Methode von irgendwelchen der vorausgegangenen Ansprüche, worin die Methode umfaßt:
ein Wörterbuch Schritt zum Speichern eines plurality von Zeilen von Textdaten, die in einer Direkte Zugriffsweise organisiert sind.

## Revendications

1. Une méthode de l'entrée du texte qui comprend:
un pas pour entrer une ligne de texte données, caractère par caractère;
un pas de dictionnaire pour emmagasiner un plurality de données consister en une ligne de texte données, tel qu'une abréviation ou une sténographie, et a associées mot données dans un dictionnaire;
caractérisé dans que susmentionnée associées mot données contiennent un ou mots plus relatifs, et dans lequel la méthode comprend;
un pas pour déterminer une seule ligne des texte données dans susmentionnée dictionnaire qui inclut susmentionnée entré ligne des texte données, sans encore une autre dépression de des spéciale fonction clef, au moment de chaque entrée de caractère;
un pas pour entrer une ou plusieurs données-caractères additionnelles et pour déterminer un mot unique parmi des mots
relatifs pluriels qui termine avec susmentionnée entré texte données, ou qui inclut susmentionnée entré texte données, dans la partie restante de mot, sauf la partie qui était avec succès collated, sans encore une autre dépression spéciale, au moment de chaque entrée de caractère; et
un pas pour remplacer susmentionnée entrée ligne de texte données, avec des données décidées par l'pas susmentionnée pour déterminer une ligne unique de texte données, ou par l'pas susmentionnée pour déterminer un mot unique, sans une dépression clef spéciale.

2. Une méthode de l'entrée du texte qui comprend:
un pas pour entrer une ligne des texte données, caractère par caractère;
un pas de dictionnaire pour stocker une pluralité de lignes des texte données;
un pas pour identifier lignes plurielles des texte données avec la même tige de mot dans susmentionnée dictionnaire, chacun de qui inclut susmentionnée est entré ligne des texte données, en entrant une ou plusieurs additionnelles données-caractères, qui termine avec susmentionnée entré texte données, ou qui inclut susmentionnée entré texte données, dans la partie restante de mot, sauf la partie qui était avec succès collated, sans encore une autre dépression spéciale, au moment de chaque entrée de caractère;
un pas pour remplacer susmentionnée entrée ligne de texte données avec susmentionnée texte données décidées par susmentionnée l'pas pour identifier et déterminer une ligne unique de texte données, sans une dépression clef spéciale.

3. La méthode de quelconque des revendications précédentes, dans lequel la méthode comprend:
un pas pour emmagasiner une ligne de texte données, et ajouter 1 au compteur de entrées des données, caractère par caractère;
un pas de dictionnaire pour mémoriser une pluralité de lignes de données textuelles avec uniques position compteur, qui est donné à chaque ligne de texte données;
un pas pour déterminer une ligne de texte données avec unique position compteur lequel est le même comme les contenus de d'entrées compteur, et qui comprend susmentionnée ligne de texte données, sans pression supplémentaire d'une touche spécifique, au moment de chaque entrée de caractère;
un pas pour reconnaître des plurielles ligne de texte données, comprenant susmentionnée ligne de texte données, et pour déterminer une ligne unique de texte données avec susmentionnée uniques position compteur dans susmentionnée dictionnaire qui est le nombre minimum ou maximum, parmi susmentionnée reconnu lignes de les texte données, en comparant susmentionnée compteur de position unique avec le contenu du susmentionnée compteur de entré texte données, sans être activée par la pression supplémentaire d'une touche spécifique, au moment de chaque entrée de caractère.

4. La méthode de quelconque des revendications précédentes, dans lequel la méthode comprend:
un pas pour déterminer une ligne unique de texte données, qui a les même première et dernière parties comme ceux de susmentionnée entré ligne de texte données et qui comprend quelques autres données, entre la première partie et la dernière partie de entré ligne de texte données, sans tenir compte de la continuité de susmentionnée quelques autres données pour être équivalent dans collating susmentionnée entré ligne de texte données avec ceux dans susmentionnée dictionnaire, soit de gauche à droite comparaison pour susmentionnée première partie et après données, soit la droite à gauche comparaison pour susmentionnée dernière partie et ses données précédant, sans en ce qui concerne être activée par la pression supplémentaire d'une touche spécifique, au moment de chaque entrée de caractère.

5. La méthode de quelconque des revendications précédentes, dans lequel la méthode comprend:
un pas pour déterminer une ligne unique de texte données, qui a la même commencement partie que la commencement partie de susmentionnée entré ligne de texte données, et qui a la même final partie que la partie restante de susmentionnée entré ligne de texte données, sans être activée par la pression supplémentaire d'une touche spécifique, au moment de chaque entrée de caractère.

6. La méthode de quelconque des revendications précédentes, dans lequel la méthode comprend:
un pas pour entrer une ligne de texte données consister en une ficelle de caractères ou coup de caractères;
un pas de dictionnaire pour emmagasiner une pluralité de lignes de texte données qui consiste en une ficelle de caractères ou coup de caractère;
un pas pour déterminer une ligne unique des texte données qui inclut susmentionnée ligne des texte données ou qui inclut les premières données suivies par quelques autres données de ligne des texte données, sans faire agir par la dépression d'une clef de fonction spéciale, au moment de l'entrée de données;
un pas pour substituer susmentionnée entré ligne de texte données avec les données déterminé par susmentionnée l'pas pour déterminer une ligne unique de texte données, ou générer et produire l'image imprimée créé utilisant susmentionnée ligne de texte données déterminé par susmentionnée l'pas pour détermination de une ligne unique de texte données.

7. La méthode de quelconque des revendications précédentes, dans lequel la méthode comprend:
un pas pour déterminer une unique ligne de texte données comprend la détermination de prédéterminés numéro gamme de lignes de texte données dans susmentionnée dictionnaire;
un pas pour identifier et déterminer un mot unique comprend la détermination d'une gamme de prédéterminée numéro de données mot dans susmentionnée dictionnaire; et
un pas pour identifier et déterminer une ligne unique de texte données comprend la détermination de prédéterminée numéro gamme de lignes de texte données dans susmentionnée dictionnaire.

8. La méthode de quelconque des revendications précédentes, dans lequel la méthode comprend:
un pas se souvenir d'une pluralité de lignes de données du texte organisé dans une mode de l'accès direct.
